(19) **Europäisches Patentamt**
**European Patent Office**
**Office européen des brevets**

(11) **EP 2 186 659 B1**

(12) **FASCICULE DE BREVET EUROPEEN**

(45) Date de publication et mention
de la délivrance du brevet:
**01.05.2013  Bulletin 2013/18**

(51) Int Cl.:
**B60C 23/04** *(2006.01)*

(21) Numéro de dépôt: **10153619.1**

(22) Date de dépôt: **29.09.2004**

(54) **Dispositif de détection du sous gonflage d'un pneumatique**

Vorrichtung zur Erkennung eines niedrigen Reifenluftdrucks

Device for dectecting a tire low pressure

(84) Etats contractants désignés:
**AT BE BG CH CY CZ DE DK EE ES FI FR GB GR HU IE IT LI LU MC NL PL PT RO SE SI SK TR**

(30) Priorité: **30.09.2003  FR 0311439**

(43) Date de publication de la demande:
**19.05.2010  Bulletin 2010/20**

(62) Numéro(s) de document de la (des) demande(s)
initiale(s) en application de l'article 76 CBE:
**04787477.1 / 1 673 239**

(73) Titulaire: **Johnson Controls Technology Company**
**Holland, MI 49423 (US)**

(72) Inventeur: **Walraet, David**
**78100 Saint-Germain En Laye (FR)**

(74) Mandataire: **Gevers France**
**41, avenue de Friedland**
**75008 Paris (FR)**

(56) Documents cités:
**US-A1- 2003 074 961**

**Description**

L'invention concerne les dispositifs de fuite, et notamment les dispositifs de détection du sous-gonflage des pneumatiques des roues de véhicules automobiles.

Le document US-A-20030074961 décrit un dispositif de détection d'une chute de la pression d'un pneu.

Les dispositifs de détection peuvent être intégrés dans des calculateurs d'habitacle ou plus spécifiquement dans des boîtiers TPMS (tyre pressure measurement system).

Un boîtier TPMS collecte les informations de pression P et de température T du gaz contenu dans un pneumatique grâce à des capteurs et à un émetteur radio, généralement solidaires de la jante de la roue. Un récepteur radio disposé dans le boîtier permet de recevoir périodiquement une trame de données représentatives de la pression et de la température.

La période de collecte des trames de données issues de chaque roue est, en principe, l'inverse de la fréquence théorique d'émission des trames par les émetteurs qui est déterminée par le calculateur d'habitacle en fonction d'un état de fonctionnement du véhicule (arrêt, roulage).

Pour détecter une fuite, on peut calculer son débit à partir de l'évolution de la pression, d'une trame à l'autre, à la fréquence théorique ci-dessus, c'est-à-dire que l'on calcule le débit à partir de l'écart de pression enregistré sur le temps théorique.

Cette détection n'est cependant pas idéale.

En effet, d'une part, la température de la jante, donc du gaz contenu dans le pneumatique, peut varier de façon importante, par exemple lors d'un coup de frein, ce qui provoque une variation de la pression et une variation du débit calculé pouvant être interprétée à tort comme une fuite. En effet, la compensation thermique, même si elle est appliquée, n'est pas immédiatement répercutée, étant donné l'importance du temps de réponse d'un capteur de température, plus grande que celle d'un capteur de pression.

D'autre part, le temps entre deux trames peut ne pas être constant:

1) il peut être diminué volontairement, par exemple si la surveillance de la pression des pneumatiques demande à être accrue, auquel cas le débit calculé diminue avec le temps entre deux trames,
2) il peut augmenter involontairement en cas de perte de trame provoquée par une mauvaise liaison radio. Le débit calculé peut alors doubler, tripler etc., à l'insu du boîtier TPMS, qui ne peut donc appliquer la moindre correction.

On connaît des algorithmes mathématiques de lissages des données de pression et de température pour atténuer les conséquences de ces sources d'erreurs. Cette solution n'évite pas un retard de détection de crevaison avérée, ni une détection intempestive, ce qui peut être préjudiciable pour la sécurité du conducteur et des passagers du véhicule.

La demanderesse s'est saisie du problème et propose pour le résoudre, un dispositif de détection du sous-gonflage d'un pneumatique d'une roue de véhicule automobile, comportant des moyens de mesure de pression et de température du gaz contenu dans le pneumatique, des moyens de collecte des données de mesure de pression et de température, caractérisé par le fait qu'il est prévu des moyens de calcul pour compenser la mesure de pression par la température, les moyens de calcul étant agencés pour établir la relation.

$$Pc = (Pm + 1{,}014)\frac{Tref}{Tm} - 1{,}014$$

dans laquelle Pc et Pm sont des pressions relatives, les températures Tref et Tm étant exprimées en degrés Kelvin, et pour comparer la pression compensée à une pluralité de seuils de sous-gonflage.

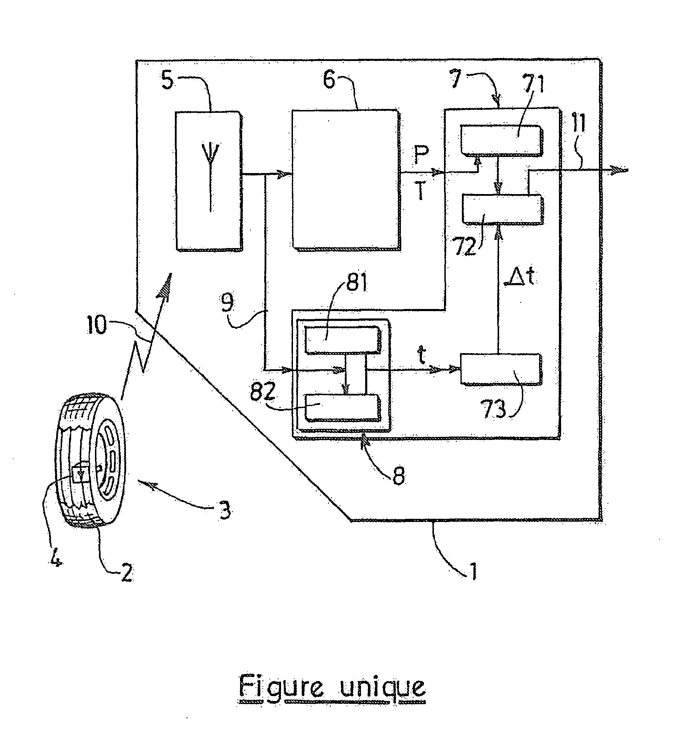

L'invention sera mieux comprise à l'aide de la description suivante d'une forme de réalisation du dispositif de l'invention et de la figure unique en annexe représentant un schéma par blocs fonctionnels du dispositif,

Un dispositif 1 de détection de fuite et, plus couramment, de crevaison d'un pneumatique 2 d'une roue 3 d'un véhicule automobile (non représenté) reçoit périodiquement, par une liaison radio 10, des trames de données parmi lesquelles la pression instantanée P du gaz contenu dans le pneumatique et sa température T. Les grandeurs P et T sont mesurées par des capteurs (non représentés) dans un boîtier 4 fixé sur la jante ou sur la valve de la roue 3, à l'intérieur du pneumatique 2, C'est le boîtier 4, également équipé d'un émetteur (non représenté), qui émet les trames de données déjà évoquées ci-dessus.

Le dispositif de détection 1 comporte des moyens de collecte des trames de données de mesure issues du boîtier 4 : un récepteur 5 de réception des signaux radio 10, les transformant en signaux électriques analogiques, et un démodulateur 6 transformant ces signaux analogiques en signaux numériques puis en données numériques, dont la pression P et la température T du gaz dans le pneumatique.

Le dispositif 1 comporte également, en sortie du démodulateur 6, des moyens 7 de calcul, ici un microprocesseur, pour, à partir des données P et T transmises, calculer une éventuelle fuite. Le calcul de fuite est effectué par un module 71, calcul lancé chaque fois qu'un couple de données (P, T) est disponible en sortie du démodulateur 6. Un nodule 72 de détection de dérive de pression fournit à l'utilisateur une information de détection de crevaison, ou de fuite, par la sortie 11, à partir des informations délivrées par le module 72 et un module 73, en sortie d'un module 8, de calcul d'écart de temps entre deux couples successifs de données. Le module 8 est un nodule de datation qui comporte une horloge 81 et une mémoire 82, pour horodater la réception des données de mesure, commandée par le récepteur 5 grâce à un système d'interruption 9. Les modules 73 et 8 sont ici intégrés au microprocesseur 7.

Le fonctionnement du dispositif de détection va maintenant être décrit.

Quand le récepteur 5 reçoit une trame $\Theta i$ contenant les données Pi et Ti, il émet un signal d'interruption 9 comandant le module de datation 8, ce qui déclenche la mémorisation, dans la mémoire 82, de l'instant ti de l'horloge 81, correspondant à la réception de la trame, Il transmet ensuite la trame $\Theta i$ au démodulateur 6 qui en extrait les données (Ti, Pi) et les transmet au microprocesseur 7. Le microprocesseur 7, dès réception du couple de données (Ti, Pi), lit l'instant ti disponible dans la mémoire 82, déjà présent grâce au système d'interruption 9.

A la trame suivante $\Theta i+1$, le microprocesseur obtient de même (Ti+1, Pi+1) et ti+1.

Le module de calcul d'écarts 73 calcule :

$$\Delta t = t_{i+1} - t_i$$

Le module de calcul de fuite 71 calcule :

$$\Delta P = P_{i+1} - P_i$$

Le module de détection 72 calcule ensuite le débit de fuite par la formule donnant la dérive de pression :

$$D_p = \Delta P / \Delta t$$

et compare $D_p$ à un seuil $S_p$ de détection de crevaison ou de fuite au-delà duquel une alarme est émise sur la sortie 11 du microprocesseur 7.

Mais la relation $\Delta P / \Delta t$ est, pour ainsi dire, une vitesse de variation de pression alors qu'on souhaite appréhender une variation de quantité de gaz. Un pneumatique n'est toutefois pas isotherme ; il se peut parfaitement qu'il y ait variation de pression sans qu'il n'y ait variation de quantité de gaz. Or, il est tout aussi important de détecter une fuite quand elle surgit que de ne pas en détecter quand il n'y en a pas. C'est dans ces conditions que la demanderesse a jugé préférable d'intégrer la température dans les calculs proposés pour pallier la situation évoquée ci-dessus.

Dans la relation :

$$PV = nRT \qquad\qquad (1)$$

prise en compte dans les calculs ci-dessus, avec, pour hypothèses, que l'intérieur du pneumatique contient un mélange de gaz parfaits et que son volume intérieur est constant,
P est la constante des gaz parfaits et
n, représentant le nombre de moles, est également une constante s'il n'y a pas de fuite.

Un seuil de détection est fourni par le manufacturier du pneumatique ou le constructeur du véhicule. Or, un tel seuil est fourni pour une température de référence Tref.

Si l'on veut donc en tenir compte, il faut compenser la pression mesurée par la température et considérer, non pas la pression mesurée Pm, mais la pression compensée Pc, liée à Pm, compte tenu de la relation (1) et des hypothèses y associées, par la relation (2)

$$\frac{Pm}{Tm} = \frac{Pc}{Tref} \qquad (2)$$

dans laquelle Tm est la température mesurée en même temps que Pm, à l'intérieur du pneumatique.

Il en résulte la relation (3)

$$Pc = Pm \; \frac{Tref}{Tm} \qquad (3)$$

Et c'est à partir de la valeur de Pc, qu'on décidera, si c'est le cas, qu'un seuil est franchi et qu'une alarme doit être émise.

Cependant, dans la relation (1), la pression P est une pression absolue, exprimée en pascals ou en bars, de même que T est une température absolue, exprimée en degrés Kelvin.

Quand on mesure la pression d'un pneumatique, aussi bien par le boîtier 4 qu'à une station service, on mesure une pression relative. Quand on mesure 0 bar, la pression absolue est en réalisé de 1,014 bars.

Ainsi, si la température de mesure est par exemple de 20°Celcius, la relation (3) doit être corrigée pour devenir la relation (4).

$$Pc = (Pm + 1{,}014)\frac{Tref}{Tm} - 1{,}014 \qquad (4)$$

dans laquelle Pc et Pm sont des pressions relatives, les températures Tref et Tm étant exprimées en degrés Kelvin.

Naturellement, et au-delà de la détection de fuite, les considérations développées ci-dessus s'appliquent tout aussi bien à la détection du sous-gonflage d'un pneumatique, la relation (4) pouvant être utilisée pour comparer la pression compensée à une pluralité de seuils de sous-gonflage. On notera que la crevaison peut-être assimilée à un sous-gonflage.

Dans ces conditions, les moyens de calcul (7) sont naturellement agencés pour mettre en oeuvre les relations présentées ci-dessus.

Il peut être également prévu une alarme émettant un signal sur commande de la pression compensée, qu'il s'agisse d'une détection de fuite ou d'une détection de sous-gonflage.

**Revendications**

1. Dispositif de détection du sous-gonflage d'un pneumatique (2) d'une roue (3) de véhicule automobile, comportant des moyens (4) de mesure de pression et de température du gaz contenu dans le pneumatique (2) et des moyens (4, 5, 6) de collecte des données de mesure de pression et de température,
   **caractérisé par le fait qu'**il est prévu des moyens (7) de calcul :

   - pour compenser la mesure de pression par la température à partir de la relation :

$$Pc = (Pm + 1{,}014)\frac{Tref}{Tm} - 1{,}014$$

   dans laquelle Pc et Pm sont des pressions relatives, les températures Tref et Tm étant exprimées en degrés Kelvin ;
   - et pour comparer la pression compensée à une pluralité de seuils de sous-gonflage.

**Claims**

1. Device for detecting the underinflation of a tyre (2) of a motor vehicle wheel (3), comprising means (4) for measuring the pressure and temperature of the gas contained in the tyre (2) and means (4, 5, 6) for collecting the pressure and temperature measurement data, **characterised in that** calculation means (7) are provided:

   - for temperature-compensating the pressure measurement on the basis of the relationship:

$$Pc = (Pm + 1{,}014)\frac{Tref}{Tm} - 1{,}014$$

   in which Pc and Pm are relative pressures, the temperatures Tref and Tm being expressed in kelvins;
   - and for comparing the compensated pressure with a plurality of underinflation thresholds.

**Patentansprüche**

1. Vorrichtung zur Erkennung des unzureichenden Luftdrucks eines Reifens (2) eines Kraftfahrzeugrades (3), aufweisend Mittel (4) zum Messen des Drucks und der Temperatur des in dem Reifen (2) enthaltenen Gases und Mittel (4, 5, 6) zum Erfassen der Druck- und Temperaturmessdaten, **dadurch gekennzeichnet, dass** Mittel (7) zum Berechnen vorgesehen sind:

   - um die Druckmessung durch die Temperatur zu kompensieren, ausgehend von der Beziehung:

$$Pc = (Pm + 1{,}014)\frac{Tref}{Tm} - 1{,}014$$

   wobei Pc und Pm relative Drücke sind, wobei die Temperaturen Tref und Tm in Grad Kelvin ausgedrückt werden;
   - und um den kompensierten Druck mit einer Vielzahl von Grenzwerten für den unzureichenden Luftdruck zu vergleichen.

Figure unique

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030074961 A